# EUROPÄISCHE PATENTSCHRIFT

(11) **EP 0 892 259 B1**
(45) Veröffentlichungstag und Bekanntmachung des Hinweises auf die Patenterteilung: **26.09.2001**
(21) Anmeldenummer: 98112442.3
(22) Anmeldetag: 06.07.1998
(51) Int. Cl.: G01L 17/00, G01L 1/16

(54) **Anordnung zum Messen des Reifendrucks von rollenden Fahrzeugen**
Apparatus for measuring the pressure in a tyre of a wheeled vehicle
Dispositif pour mesurer la pression de pneumatiques des véhicules roulants

(30) Priorität: 16.07.1997 CH 173897
(43) Veröffentlichungstag der Anmeldung: 20.01.1999
(73) Patentinhaber: K.K. Holding AG, 8408 Winterthur (CH)
(72) Erfinder: Vollenweider, Kurt, 8457 Humlikon (CH); Sommer, Roland, Dr., 8400 Winterthur (CH); Calderara, Reto, 8312 Winterberg (CH)

(56) Entgegenhaltungen:
- EP-A- 0 545 641
- EP-A- 0 654 654

## Beschreibung

Die Erfindung betrifft eine Anordnung gemäss Oberbegriff von Anspruch 1.

Der Gedanke zur Messung des Reifendrucks von fahrenden Fahrzeugen existiert in der Literatur seit 30 Jahren. Seither sind dutzende von Patentvorschlägen bekannt geworden, die ausnahmslos keine breitere Anwendung fanden. Die Gründe der Misserfolge liegen einerseits in den zu komplexen Sensoren, die höchstens für Laborbetrieb taugten und andererseits in den mangelhaften elektronischen Auswerte- und Rechnereinheiten, die den grossen Datenanfall zu wenig schnell verarbeiten konnten.

Durch die statistische Erfassung von Fahrzeugunfällen konnte z.B. in England nachgewiesen werden, dass 16 % der schweren Unfälle infolge Unterdruck in mindestem einem der Fahrzeugräder auftraten. In den USA haben Ferntransportfirmen andererseits begonnen, bei Doppelreifen den einen davon mit bis zu 30 % Überdruck aufzupumpen, wodurch der Rollwiderstand gesenkt und damit Transportkosten reduziert werden können. Dadurch werden jedoch die Strassenbeläge überdurchschnittlich strapaziert, wodurch erhebliche Belagschäden entstehen.

Für beide Fälle, Unterdruck oder Überdruck in den Fahrzeugreifen, sucht man nach Messmethoden, um entsprechende Fahrzeuge im rollenden Verkehr erkennen und aus ihm ausscheiden zu können. Gegenüber dem bekannten Stand der Technik mit Einrichtungen, wo der Reifendruck hauptsächlich zu Laborzwecken und damit in Langsam-Überfahrt gemessen wurde, ist durch die neuen Wünsche von Versicherungen, Strassenunterhalts-Organisationen und Verkehrsleitstellen ein wesentlich erweitertes Anforderungsprofil entstanden. Aus der geschützten Laboratmosphäre ist die Messanordnung in die betriebsrauhe Umwelt von Fernstrassen und Tanksstellen zu übertragen.

Zum Stand der Technik wird auf US-A-5.445.020 vom 2. Dezember 1993 hingewiesen, wo eine Mehrfachanordnung von Kraftmesszellen gezeigt ist, die in einem flachen Plattensystem eingebaut und, z.B. als mobile Messmatte, beliebig verlegt werden kann, insbesondere vor Tankstellen. Die Messmatte weist quadratische Krafteinleit-Elemente auf, die mehrreihig hintereinander angeordnet sind.

Ferner ist aus US-A-5.461.924 ein rohrförmiger Aufnehmer mit Krafteinleit- und Kraftableitflanschen bekannt, der als Sensoren eine Anzahl Piezoelemente aufweist, die in Gruppen oder einzeln geschaltet werden können. Mit dieser Anordnung können zwar bei Doppelreifen die Einzelreifendrücke erfasst werden, eine Erfassung mehrerer Messpunkte desselben Reifens ist jedoch nicht möglich, wegen des Übersprechens der einzelnen Nachbar-Messelemente, infolge der starren Rohrkonstruktion.

Für einen Relativ-Vergleich zwischen den einzelnen Rädern eines Fahrzeugs ist eine Messanordnung aus US-A-4.630.470 bekannt. Bei dieser werden die einzelnen Räder künstlich zu Schwingungen angeregt, von denen ein Frequenzspektrum aufgenommen wird. Durch einen Vergleich der Spektren der einzelnen Räder untereinander, soll ein Rad, dessen Druck von demjenigen der anderen abweicht, erkannt werden an einem veränderten Frequenzspektrum. Diese Anordnung setzt voraus, dass die Mehrzahl der Räder eines Fahrzeugs mit dem korrekten Reifendruck versehen ist; anderenfalls sind Räder mit Unter- oder Überdruck nicht zu erkennen.

Der Erfindung liegt deshalb die Aufgabe zugrunde eine Messanordnung zu schaffen, die gestattet, die exakte Reifenaufstandsfläche mit den Isobaren eines jeden Rades zu ermitteln, rechnerisch darzustellen und mit denjenigen der übrigen Räder zu vergleichen. Für diesen Mess- und Rechenvorgang müssen die Fahrzeuggeschwindigkeit und pro Rad eine Vielzahl, z.B. mindestens 10 Überrollsegmente erfasst werden.

Diese Aufgabe wird durch die in den Ansprüchen gekennzeichneten Erfindung gelöst, wobei beispielsweise die voraus installierte Kontaktschiene im Zusammenwirken mit der Messschiene der Ermittlung der Fahrzeuggeschwindigkeit dient, und die Aufteilung des Aufnehmers in Einzelemente ein gegenseitiges Übersprechen von Nachbar-Messelementen verhindert, während die Abmessungen der Rechteckelemente gewährleisten, dass von der Messschiene die Messwerte des darüber rollenden Rades auch bei den unterschiedlichsten Reifenprofilen korrekt erfasst werden.

Die Datenerfassungsanlage speichert die einzelnen Reifenaufstandsflächen sofort zwischen und vergleicht spezielle Merkmale des Isobarenverlaufs mit den Abdruckbildern der übrigen Räder eines Fahrzeugs. Da jedoch beispielsweise die Isobaren-Bilder des Schwerverkehrs, der die grössten Strassenschäden und im allgemeinen auch die schwersten Unfälle verursacht, unabhängig von der Fahrzeugund/oder Reifenmarke sowie vom Fahrzeug- oder Reifentyp, sehr ähnlich und miteinander vergleichbar sind, können die Isobaren-Bilder auch mit dem Bild einer in der Datenerfassungsanlage gespeicherten "Normaldruck"-Isobare für die jeweilige Fahrzeuggattung verglichen werden, die beispielsweise aus der gleichzeitig erfassten Achslast und/oder der Anzahl der über die Anlage rollenden Räder oder Achsen geschlossen werden kann.

Eine bildliche Darstellung oder ein Ausscheidesignal sind sofort nach der Überfahrt verfügbar, wobei die Verarbeitungsgeschwindigkeit so hoch sein muss, dass Fahrzeuge mit fehlerhaften Reifendrücken aus dem normalen Strassenverkehr ausgeschieden werden können; so wird ein Monitoring des Verkehrs nach Reifendruckzuständen möglich.

Die Erfindung ist in Beispielen auf den folgenden 16 Figuren dargestellt. Es zeigen:
- Fig. 1: Eine Reihenanordnung einzelner Kraftmesselemente, montiert auf Sammelschiene.
- Fig. 2: Eine Kraft-Messschiene eingebaut in Nute der Fahrbahn.
- Fig. 2a: Drucklinien einzelner Kraftmesselemente beim Überrollen gemäss Fig. 2.
- Fig. 3: Ein Fahrzeugrad beim Überrollen einer eingebauten Kraftmessschiene im Aufriss.
- Fig. 4: Gemäss Fig. 3 im Grundriss mit der Reifenaufstandsfläche.
- Fig. 5: Eine Aufsicht auf die Einzel-Kraftmesselemente mit einem typischen Reifendruckprofil.
- Fig. 6: Drei Reifenquerschnitte über Kraft-Messschienen angeordnet.
- Fig. 7: Drei entsprechende Reifenaufstandsflächen mit Isobaren.
- Fig. 8: Eine Lastwagen-Hinterachse mit ungleichen Reifendrücken.
- Fig. 9: Die entsprechenden maximalen Drucklinien der Einzelelemente.
- Fig. 10: Lastfahrzeug in Auftankstelle eingefahren.
- Fig. 11: Detail von Fig. 10 im Grundriss.
- Fig. 12: Ladezustand bezüglich Mittelachse des Fahrzeugs.
- Fig. 13: Personenwagen in Auftankstelle eingefahren.
- Fig. 14: Berechnete Reifenaufstandsflächen des Fahrzeugs nach Fig. 13.
- Fig. 15: Auswertetafel bezüglich des Drucks aller Reifen.

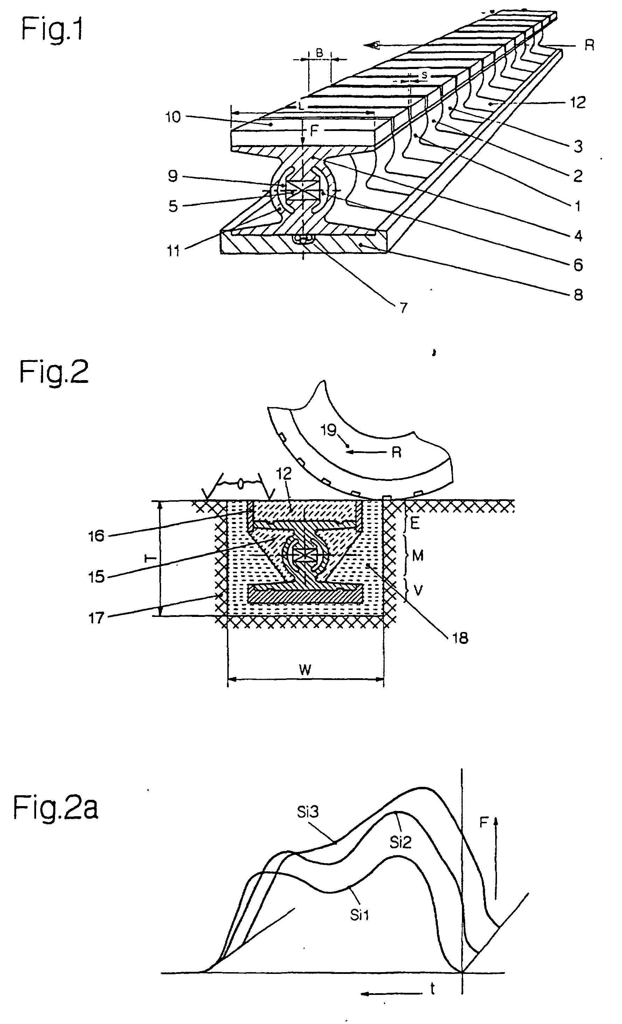

In Fig. 1 ist eine erfindungsgemässe Messschiene 12 mit einer Reihenanordnung von Kraftmesselementen 1,2,3..n, dargestellt, deren Breite mit B und deren Länge, in Fahrtrichtung R gesehen, mit L bezeichnet sind. Jedes Kraftmesselement 1,2,3 ist mit eigener Kristallanordnung 5 als Sensor versehen, die bei Einwirkung einer Kraft F ein proportionales elektrisches Signal in eine Signalleitung 6 abgibt. Im Sammelkanal 7 werden die einzelnen Signalleitungen abgeführt zur Datenerfassungseinheit, die nicht gezeigt ist. Die Einzelzellen 1,2,3 sind Sägeabschnitte eines Metallprofils, bestehend aus Kraft-Einleitflansch, Rohrteil 11 und Kraft-Abstützflansch. Im Rohrteil 11 ist die Kristallanordnung 5 unter mechanischer Vorspannung in einem Kunststoffausguss 9 untergebracht. Dieser Ausguss schützt die auf Feuchtigkeit empfindliche Kristallanordnung 5. Die Einzelkraft-Messelemente 1,2,3.. sind mit einer Sand-Epoxy-Aufgussplatte 10 versehen, die gesamthaft nach Einbau mit der Strassenoberfläche überschliffen werden kann. Die Zwischenräume S zwischen den Einzelkraft-Messelementen 1,2,3 sind möglichst klein gehalten und mit Polyurethan-Giessharz ausgegossen.

Die Gesamtlänge einer Messschiene 12 kann z.B. 1 m oder mehr betragen; sie fasst bei einer Breite B eines Einzelelements von 20 mm etwa 50 und mehr Kraft-Messelemente 1,2,3, die auf der Montageschiene 8 montiert sind.

Nach Fig. 2 wird die fertigmontierte Messschiene 12 vor Einbau noch mit Seitenpolster 15, bestehend aus Giessmasse und Gummiband 16 versehen und hierauf in die vorbereitete Strassennute 17 mit Eingiessmasse 18 festgegossen. Die Dimensionen der Strassennute 17 bezüglich Tiefe T und Weite W sind erfindungsgemäss etwa 1:1, wodurch eine solide Verankerung auch bei rollendem Verkehr gewährleistet wird.

Der obere Teil E der Messschiene 12 stellt den Krafteinleitteil, der mittlere M den Signalumwandlungsteil und V den Verankerungsteil dar. Das Oberflächenteil O wird durch Schleifen in eine Planfläche zur Strassenoberfläche gebracht. Der Reifen 19 ist im Begriff auf die Messschiene 12 aufzufahren.

Nach Fig. 2a entsteht durch den Überrollvorgang des Reifens 19 in jedem Einzelkraft-Messelement 1,2,3... ein Überrollsignal Si₁,Si₂, Si₃..., proportional der Kraft F im Zeitablauf t. Diese Überrollsignale und die Fahrgeschwindigkeit v bilden die Hauptparameter der anschliessenden Rechnerarbeit in der Datenerfassungsanlage.

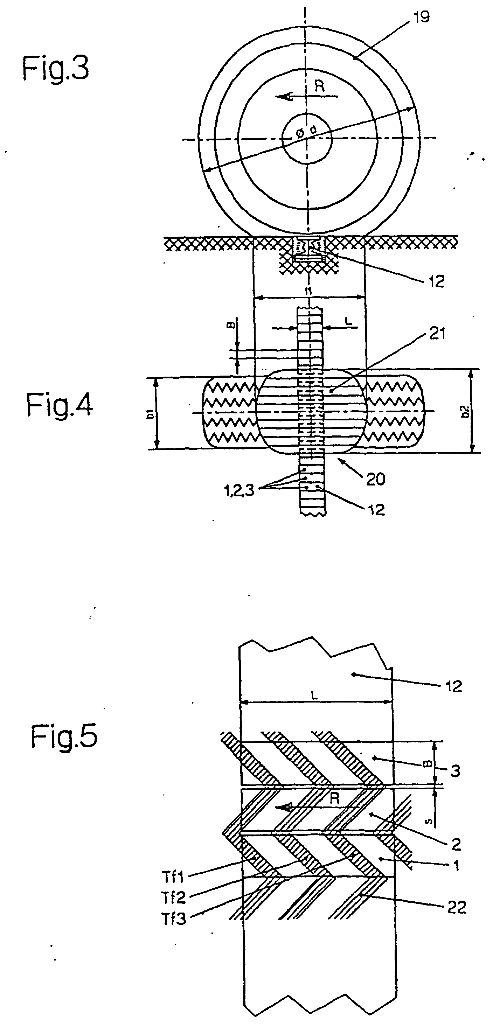

Fig. 3 zeigt den Reifen 19 im Aufriss genau über der eingebauten Messschiene 12.

Fig. 4 zeigt Fig. 3 im Grundriss über der Messschiene 12. Die Reifenaufstandsfläche 20 ist üblicherweise breiter als die Reifenbreite b₁. Die Messschiene 12 mit den Einzelkraft-Messelementen 1,2,3 und deren Breite B unterteilt die Reifenaufstandsfläche 20 in mindestens 8 bis 10 Unterabschnitte 21, womit eine befriedigende Auflösung der anschliessenden Rechnerleistung ermöglicht wird.

Fig. 5 zeigt im Grundriss die Messschiene 12 mit den Einzelkraft-Messelementen 1,2,3, überlagert von einem durchschnittlichen Reifenprofil 22, dargestellt in Fahrtrichtung R. Damit jeweils mindestens drei Teilflächen T_{f1}, T_{f2}, T_{f3} des Reifenprofils 22 auf einem Einzelkraftmesselement 1,2,3 aufliegt, sollten deren Längen L mindestens etwa 50 mm betragen.

Für befriedigende Auflösung vorteilhaft hat sich eine Minimalbreite B der Einzelkraft-Messelemente von 15 mm ergeben, sodass das Verhältnis L/B ~ 3.0 beträgt. Mit diesen Grunddaten ergibt sich ein Opitimum an Resultatgenauigkeit zum technichschen Aufwand und damit den Gesamtkosten und der Dauerbetriebssicherheit.

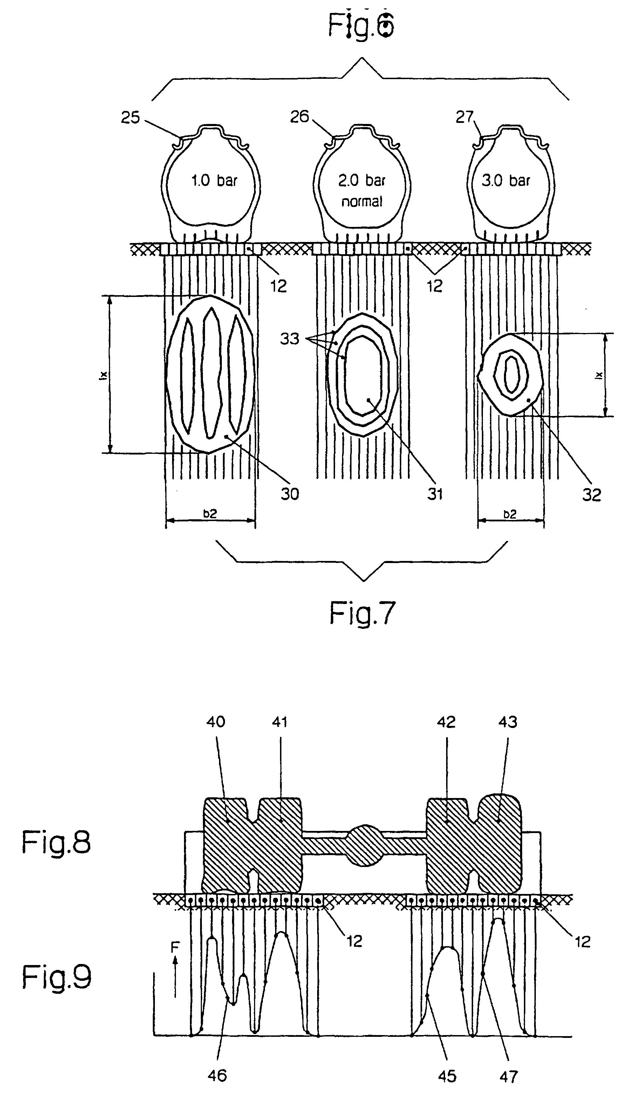

Fig. 6 zeigt drei Reifenzustände jeweils über der Messschiene 12.

Fig. 7 zeigt drei errechnete Reifenaufstandsflächen 30,31,32 mit den Längen lx und Breiten bx. Die Isobaren 33, Linien gleicher Druckverteilung, geben Aufschluss über die Verteilung der Auflagekräfte und sind mit dem Reifendruck in direktem Zusammenhang.

Zur Beurteilung des Reifendrucks können aus den so errechneten Daten verschiedene Auswertemethoden gewählt werden. Mit einer entsprechenden Programmierung der Datenerfassung lassen sich beispielsweise Absolutwerte des jeweiligen Reifendrucks aus der mit Hilfe der voraus verlegten Kontaktschiene bestimmten Fahrzeuggeschwindigkeit und den Längen lx der aufgezeichneten Reifenaufstandsflächen ermitteln.

Zu Vergleichszwecken am gleichen Fahrzeug genügen Vergleiche der Längen lx. Genauer wird ein Vergleich der Flächen. So lässt sich aus der Form der Isobaren beispielsweise ersehen, ob in einem Reifen Unter-, Normal- oder Überdruck herrscht.

Fig. 8 zeigt eine Hinterachse eines Lastfahrzeugs mit je zwei Doppelreifen jeweils über Messschienen 12.

Fig. 9 zeigt die Spitzenwerte der in Fig. 8 gezeigten Reifen bei Überrollen der Messschienen 12. Zur Auswertung solcher Vergleichsdaten genügen die Maximalwerte der einzelnen Überrollsignale Si₁, Si₂, Si₃, welche die Summenkurven 46 für Unterdruck, 45 für Normaldruck und 47 für Überdruck ergeben und sich rechnerisch leicht erkennen lassen. Aus den Flächen der Kurven 45 bis 47 lassen sich vom Rechner auch sofort die Achslasten, links und rechts getrennt, berechnen.

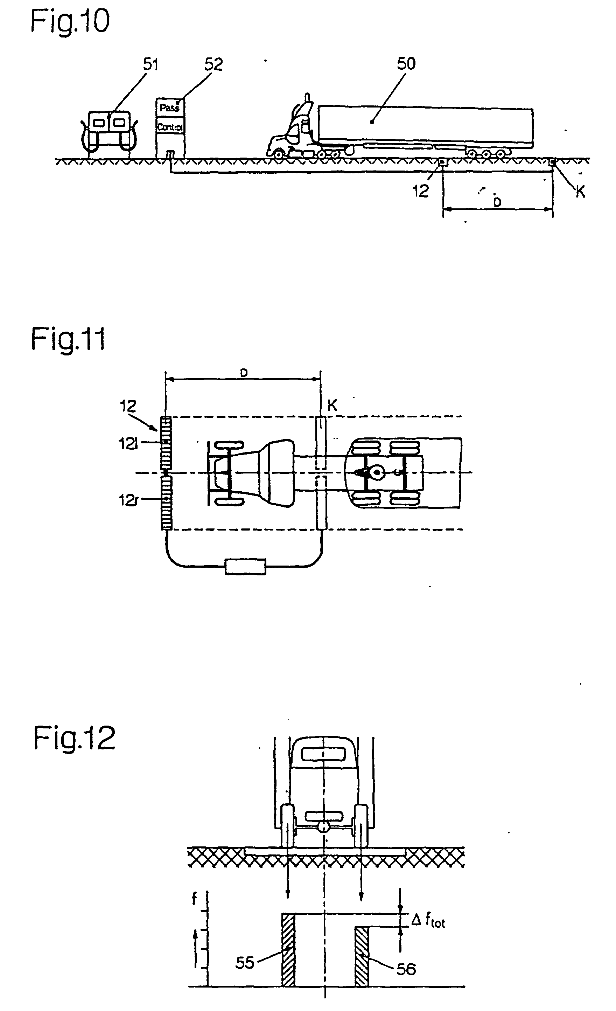

Fig. 10 zeigt im Anwendungsbeispiel, wo ein Lastfahrzeug 50 in eine Tankstelle einfährt. Nach Erreichen der Zapfstelle 51 ist auf der Anzeigetafel 52 die Information der überrollten Messschiene 12 und der einige Meter voraus eingelassenen Kontaktschiene K bereits angezeigt.

Fig. 11 zeigt den Grundriss, wo die Messschiene 12 in der Fahrbahnmitte geteilt und bezogen auf die Fahrtrichtung 12 l der linken Fahrbahnhälfte und 12 r der rechten Fahrbahnhälfte zugeordnet ist; dies ermöglicht wiederum gleichzeitig die Erfassung der Reifenzustände, wie auch die Summation der Achsgewichte der linken und rechten Fahrzeughälften.

Damit können, wie in Fig. 12 angedeutet, allfällige Übergewichte wie auch die Ladegutverteilung sofort überprüft werden. Damit ergibt sich ein interessantes zusätzliches Dienstleistungsangebot des Tankstellenhalters. Ähnlich wertvolle, automatisierte Daten können an Lastwagenterminals von Bedeutung werden.

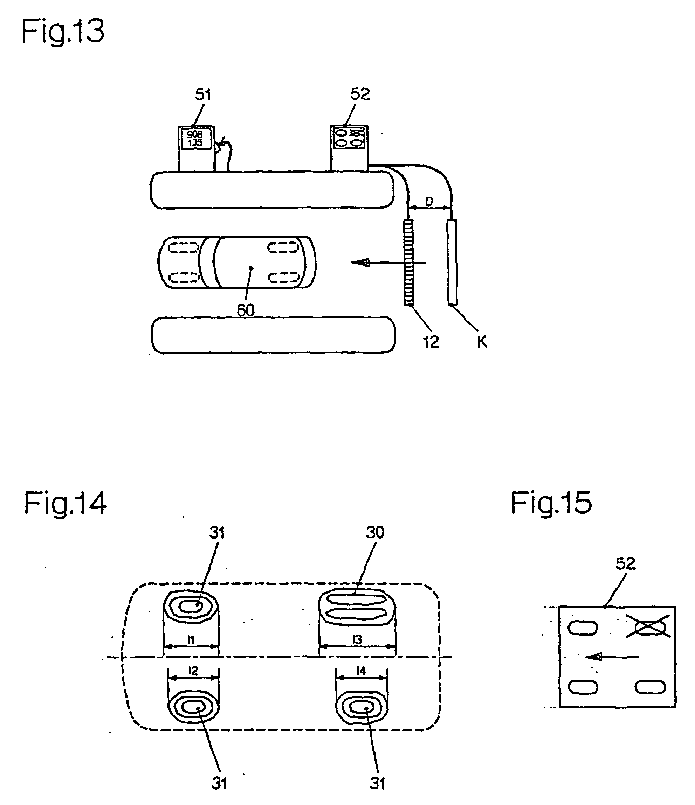

Fig. 13 zeigt eine ähnliche Situation für Personenwagen 60. Nach Anhalten bei der Zapfstelle 51 kann auf Informationstafel 52 sofort der Reifenzustand durch einfache optische Signalisierung dargestellt werden.

Nach Fig. 14 werden dazu lediglich die vier Längen 1₁, 1₂, 1₃, 1₄ verglichen und die Überlänge 1₃, z.B. durch Rotlicht auf Tafel 4 Fig. 15, dargestellt. Durch diesen Relativvergleich kann auf einfache Weise eine genügend genaue Aussage über den Reifenzustand gemacht werden, was wiederum eine zusätzliche Dienstleistung des Tankstellenhalters darstellt.

Es ist aber auch bei Haltern grosser Fahrzeugflotten angezeigt, eine automatische Erfassung der Reifenzustände der aussfahrenden Fahrzeuge zu registrieren und durch Tafeln an der Ausfahrtstelle anzuzeigen und gleichzeitig für die Betriebsüberwachung automatisch zu registrieren.

Die erfindungsgemässe Anordnung kann damit wichtige Beiträge zur Erhöhung der Betriebssicherheit im Fahrzeugverkehr bringen, indem unzulässige Reifendruckzustände im rollenden Verkehr erkennbar und ausscheidbar gemacht werden. Die Erfindung ermöglicht ferner eine automatisierte zusätzliche Sicherheitsprüfung in Fahrzeugterminals oder an Zapfstellen.

### Referenzliste

Fig. 1
   - 1,2,3: Einzelkraft-Messelemente
   - 5: Kristallanordnung
   - 6: Signalableitung
   - 7: Sammelkanal der Signalleitungen
   - 8: Montageschiene
   - 9: Kunststoffausguss
   - 10: Sand-Epoxy-Aufgussplatte
   - L: Länge Einzelkraft-Messelemente
   - B: Breite Einzelkraft-Messelemente
   - R: Fahrtrichtung
   - F: Kraft
   - 11: Rohrteil
   - S: Zwischenraum
Fig. 2
   - 12: Messschiene
   - 15: Seitenpolster
   - 16: Gummiband
   - 17: Strassennute
   - 18: Eingussmasse
   - T: Tiefe
   - W: Weite
   - E: Krafteinleitteil
   - M: Signalumwandlungsteil
   - v: Verankerungsteil
   - O: Oberflächenteil
   - 19: Rad mit Reifen
Fig. 2a
   - Si₁ , Si₂ ,: Überrollsignale der Einzelkraft-Messelemente
Fig. 3
   - 20: Reifenaufstandsfläche
   - b₁: Reifenbreite
   - b₂: Reifenaufstandsfläche, Breite
   - l₁: Reifenaufstandsfläche, Länge
Fig. 4
   - 21: Unterabschnitte der Reifenaufstandsfläche
Fig. 5
   - 22: Reifenprofil
   - T_{f1} T_{f2} T_{f3}: Teilflächen des Profils
Fig. 6
   - 25: Reifen bei Unterdruck
   - 26: Reifen bei Normaldruck
   - 27: Reifen bei Überdruck
Fig. 7
   - 30: Reifenaufstandsfläche Unterdruck
   - 31: Reifenaufstandsfläche Normaldruck
   - 32: Reifenaufstandsfläche Überdruck
   - 33: Isobaren
   - lx: Längen der Reifenaufstandsfläche
Fig. 8
   - 40: Unterdruck-Reifen
   - 41: Normaldruck-Reifen
   - 42: Normaldruck-Reifen
   - 43: Überdruck-Reifen
Fig. 9
   - 45: Summenkurve Normaldruck
   - 46: Summenkurve Unterdruck
   - 47: Summenkurve Überdruck
Fig. 10
   - 50: Lastfahrzeug
   - 51: Zapfstelle
   - 52: Anzeigetafel
   - K: Kontaktschiene
   - D: Distanz zwischen Messschiene 12 und Kontaktschiene
Fig. 11
   - 12 l: linke Messschienenhälfte
   - 12 r: rechte Messschienenhälfte
Fig. 12
   - 55: Summation der Achsgewichte links
   - 56: Summation der Achsgewichte rechts
Fig. 13
   - 60: Personenfahrzeug

## Patentansprüche

1. Aufnehmer-Anordnung zum Einbau in Fahrbahnen, zwecks Erfassung der Reifendrücke der Räder (19) eines Fahrzeugs (50, 60) während der normalen Fahrt, bestehend aus einer Reihenanordnung einzelner Sensoren, welche je einen Krafteinleitungsflansch und diesem gegenüberliegend je einen Kraftabstützflansch aufweisen, **dadurch gekennzeichnet, dass** die Messanordnung aus einer in Fahrtrichtung voraus der Messschiene (12) eingebauten Kontaktschiene (K) und einer separat angeordneten Datenerfassungsanlage (52) besteht, wobei die Messschiene (12) aus rechteckigen Einzelelementen (1,2,3) aufgebaut ist, deren Länge (L) in Fahrtrichtung (R) ein Mehrfaches ihrer Breite beträgt und die auf einer gemeinsamen Bodenschiene (8) montiert sind, welche in der Strassennute (17) der Fahrbahn so verankerbar ist, dass Tiefe (T) und Breite (W) der Nute (17) in der Strassenoberfläche etwa gleiche Dimensionen haben.

2. Aufnehmer-Anordnung nach Anspruch 1, **dadurch gekennzeichnet, dass** jedes Einzelelement (1,2,3) eine Deckplatte (10) aus einer Sand-Epoxy-Mischung aufweist, wobei der Zwischenspalt (S) zur Nachbardeckplatte mit einem elastischen Kunststoff vergossen ist.

3. Aufnehmer-Anordnung nach Anspruch 1 oder 2, **dadurch gekennzeichnet, dass** die Breite der Einzelelemente (1,2,3) im Maximum 20 mm beträgt und zum Nachbarelement einen maximalen Abstand von 0.5 mm aufweist.

4. Aufnehmer-Anordnung nach einem der Ansprüche 1 bis 3, eingebaut auf Zufahrt zu Tankstellen, **dadurch gekennzeichnet, dass** die Anordnung so gestaltet ist, dass im Gebarauch nach Anhalten zum Tankauffüllen gleichzeitig der Zustand der einzelnen Reifenfüllgrade optisch angezeigt wird, ob und allenfalls welcher Reifen auf Druck zu kontrollieren ist.

5. Aufnehmer-Anordnung nach einem der Ansprüche 1 bis 3, eingebaut auf Zu- oder Wegfahrten von Bus- oder LKW-Terminals, **dadurch gekennzeichnet dass** die Anordnung so gestaltet ist, dass im Gebrauch eine optische Anzeige und automatische Registrierung zur Überwachung der Fahrzeuge auf vorschriftsgemässe Reifenfüllwerte erfolgt.

6. Aufnehmer-Anordnung nach einem der Ansprüche 1 bis 5, **dadurch gekennzeichnet dass** die Datenerfassungsanlage (52) so gestattet ist, daß im Gehrauch, gleichzeitig zur Reifendruckverteilung auch die Gesamtkräfte der einzelnen Reifen der linken und rechten Fahrzeughälfte aufsummiert werden, um allfällige Gleichgewichtsverschiebungen anzuzeigen.

7. Aufnehmer-Anordnung nach einem der Ansprüchen 1 bis 6, **gekennzeichnet durch** eine Ergänzung der Datenerfassungsanlage derant, dass im Gebrauch gleichzeitig die Auflagekräfte aller Reifen addiert und angezeigt werden, womit das Gesamtgewicht des Fahrzeugs erfasst ist, wodurch die Fahrtauglichkeit bezüglich Reifendrücken, Symmetrie der Ladung und Gesamtgewicht automatisch registrierbar wird, um bei allfälligen Schadenfällen Referenzdaten zu liefern.

8. Verfahren zum Erfassen der Reifendrücke der einzelnen Räder (19) eines Fahrzeugs (50, 60) während der Fahrt, mit Hilfe der Aufnehmer-Anordnung nach einem der Ansprüche 1 bis 3, **gekennzeichnet durch** die folgenden Schritte:
Erfassen der Fahrzeuggeschwindigkeit durch Zeitmessung nach Berühren der in einer bestimmten Distanz (D), z.B. 200 cm, voraus verlegten Kontaktschiene (K) für jedes Einzelrad;
- Erfassen der von jedem über die Messschiene (12) rollenden Rad (19) ausgeübten Druckbelastung, in Abhängigkeit von der Zeit durch eine Vielzahl über die Radbreite (b1) angeordneter Sensoren;
- Ermitteln von Form und Stärke der Druckverteilungsprofile über die Breite (b1) jedes Rades (19) während seines Rollens über die Messschiene (12) und damit Errechnung der Reifenaufstandsfläche 20) und des Mitteldrucks jedes Rades (19);
- Vergleichen der ermittelten Druckverteilungsprofile der einzelnen Räder (19) untereinander und gegebenfalls mit einem Normal-druckprofil des entsprechenden Reifen- und Fahrzeugtyps.

## Claims

1. Sensor arrangement for installing in roadways to detect the tyre pressures of the wheels (19) of a vehicle (50, 60) during normal travel, consisting of individual sensors disposed in a line, each having a force introducing flange and a force sustaining flange opposite this, **characterized by** the measuring arrangement consisting of a contact rail (K) fitted ahead of the measuring rail (12) in the direction of travel and a separately placed data acquisition facility (52), the measuring rail (12) consisting of rectangular individual elements (1, 2, 3) whose length (L) in the direction of travel is a multiple of their width, these elements being mounted on a common bottom rail (8) which can be anchored in the groove (17) of the roadway so that the depth (T) and width (W) of the groove (17) in the road surface are of roughly equal dimensions.

2. Sensor arrangement according to claim 1, **characterized by** each individual element (1, 2, 3) having a cover slab (10) consisting of a sand and epoxy mixture, the gap (S) with the neighbouring slab being grouted with an elastic plastic.

3. Sensor arrangement according to claim 1 or 2, **characterized by** the width of the individual elements (1, 2, 3) measuring not more than 20 mm and spaced not more than 0.5 mm from the neighbouring element.

4. Sensor arrangement according to one of claims 1 to 3, installed in the approach to a filling station, **characterized by** the arrangement being so configured that in use the individual tyre inflations are indicated visually upon stopping to refuel, showing whether and which tyres need their pressures checking.

5. Sensor arrangement according to one of claims 1 to 3, installed in the approach or exit of bus or truck terminals, **characterized by** configuration enabling in use visual display and automatic recording for monitoring vehicles to verify proper tyre inflation.

6. Sensor arrangement according to one of claims 1 to 5, **characterized by** the data acquisition facility (52) being designed so that in use also the total forces of the individual tyres on the left and right halves of the vehicle are totalled at the same time as the tyre pressure distribution, in order to reveal any shifts of equilibrium.

7. Sensor arrangement according to one of claims 1 to 6, **characterized by** a supplement to the data acquisition facility (52) so that in use the bearing forces of all tyres are simultaneously added and displayed, registering the overall vehicle weight and automatically recording its roadworthiness in terms of tyre pressures, load symmetry and overall weight, yielding reference data in the event of possible damage.

8. Procedure for detecting the tyre pressures of the individual wheels (19) of a vehicle (50, 60) during travel, using the sensor arrangement according to one of claims 1 to 3, **characterized by** the following steps:
Detection of the vehicle speed by chronometry after each individual wheel touches the contact rail (K) laid at a certain distance (D) typically 200 mm ahead;
- Detection of the pressure load imposed by each wheel (19) running over the measuring rail (12) versus the time by means of a number of sensors disposed over the wheel width (b1).
- Detection of the shape and strength of the pressure distribution profiles over the width (b1) of each wheel (19) as this runs over the measuring rail (12), calculating from this the tyre contact area (20) and the mean pressure of each wheel.
- Comparison between the pressure distribution profiles ascertained for the individual wheels (19) and possibly with a normal pressure profile for the particular tyre and vehicle.

## Revendications

1. Aménagement de capteurs destiné à être installé dans les chaussées à fin de saisie des pressions des pneumatiques des roues (19) d'un véhicule (50, 60) durant le roulage normal, constitué d'une rangée de capteurs individuels comprenant chacun une bride d'introduction de force et, opposée à celle-ci, une bride d'appui, **caractérisé en ce que** l'aménagement de mesure se compose d'un rail de contact (K) installé dans le sens du roulage avant le rail de mesure (12) et d'un dispositif de saisie des données (52) séparé, le rail de mesure (12) étant constitué d'éléments de mesure (1, 2, 3) rectangulaires dont la longueur (L) dans le sens du roulage est un multiple de leur largeur et qui sont montés sur un rail de montage (8) pouvant être ancré dans une rainure (17) de la chaussée de telle manière que la profondeur (T) et la largeur (w) de la rainure (17) aient à peu près les mêmes dimensions.

2. Aménagement de capteur selon revendication 1 **caractérisé en ce que** chaque élément de mesure (1, 2, 3) comporte une plaque de recouvrement (10) constituée d'un mélange sable-epoxy, l'interstice (S) par rapport à la plaque de recouvrement contigüe étant rempli d'une masse plastique élastique.

3. Aménagement de capteurs selon revendications 1 ou 2 **caractérisé en ce que** la largeur des éléments individuels (1, 2, 3) est de 20 mm au maximum et que l'écart par rapport à l'élément contigüe est au maximum de 0,5 mm.

4. Aménagement de capteurs selon l'une des revendications 1 à 3, installé à l'entrée de stations-service, **caractérisé en ce que** l'aménagement est conçu de telle sorte qu'en utilisation après l'arrêt pour ravitaillement en carburant l'état de gonflage des pneumatiques est simultanément affiché optiquement, ainsi que, le cas échéant, l'indication du pneu dont le gonflage n'est pas correct.

5. Aménagement de capteurs selon l'une des revendications 1 à 3, installé à l'entrée ou à la sortie de gares routières ou de dépots **caractérisé en ce que** l'aménagement est conçu de telle sorte qu'en utilisation un affichage optique et un enregistrement automatique de surveillance des véhicules quant au respect des valeurs de gonflage des pneumatiques soient réalisés.

6. Aménagement de capteurs selon l'une des revendications 1 à 5 **caractérisé en ce que** l'installation de saisie des données est conçue de telle sorte qu'en utilisation, simultanément à l'affichage de la répartition des pressions de gonflage des pneus, soit additionnées les forces totales des diverses roues de la moitié gauche et de la moitié droite du véhicule afin de détecter les décalages éventuels des charges.

7. Aménagement de capteurs selon l'une des revendications de brevet 1 à 6 **caractérisé en ce qu'**en utilisation, l'installation de saisie des données est complètée d'un dispositif pour additionner les forces d'appui de tous les pneus et de les afficher et donc de saisir le poids total du véhicule permettant ainsi l'enregistrement automatique de l'état de fonctionnement du véhicule quant à la pression des pneus, à la symétrie du chargement et du poids total en charge, ces données pouvant servir de références en cas de dommages.

8. Procédé pour la saisie de la pression de gonflage des différentes roues (19) d'un véhicule (50, 60) durant le roulage à l'aide de l'aménagement de capteur selon l'une des revendications 1 à 3 **caractérisé par** les séquences suivantes:
Saisie de la vitesse du véhicule par mesure du temps après contact de chaque roue avec le rail de contact (K) disposé à une certaine distance (D), par exemple, 200 cm avant le rail de mesure;
- Saisie au moyen d'une multitude de capteurs disposés sur la largeur (b1) de la roue de la sollicitation en pression engendrée par chaque roue passant par dessus le rail de mesure (12) en fonction du temps;
- Détermination de la forme et de l'intensité des profils de répartition de pression sur la largeur (b1) de chaque roue (19) durant son passage en roulant par dessus le rail de mesure (12) et, par la même, calcul de la surface d'appui du pneu (20) et de la pression moyenne de chaque roue (19);
- Comparaison entre eux des profils de répartition de pression relevés sur les différentes roues et, le cas échéant, avec un profil de pression de référence normal correspondant au type de véhicule et de pneu.
